Europäisches Patentamt

European Patent Office

Office européen des brevets

(11) Veröffentlichungsnummer : **0 188 403**
**B1**

(12) **EUROPÄISCHE PATENTSCHRIFT**

(45) Veröffentlichungstag der Patentschrift :
13.12.89

(51) Int. Cl.⁴ : **F 02 D 41/28**, F 02 D 29/06

(21) Anmeldenummer : **86890006.9**

(22) Anmeldetag : **13.01.86**

(54) **Anordnung zum Steuern und Regeln einer Brennkraftmaschine.**

(30) Priorität : 17.01.85 DE 3501435

(43) Veröffentlichungstag der Anmeldung :
23.07.86 Patentblatt 86/30

(45) Bekanntmachung des Hinweises auf die Patenterteilung : 13.12.89 Patentblatt 89/50

(84) Benannte Vertragsstaaten :
AT DE FR GB IT SE

(56) Entgegenhaltungen :
DE—B— 2 109 693
US—A— 3 529 246
US—A— 4 154 395
US—A— 4 425 889·

(73) Patentinhaber : **VOEST-ALPINE AUTOMOTIVE Gesellschaft mbh**
**Muldenstrasse 5**
**A-4020 Linz (AT)**

(72) Erfinder : **Seibt, Artur, Dr. Ing.**
**Prinz-Eugen Strasse 6**
**A-1040 Wien (AT)**

(74) Vertreter : **Matschnig, Franz, Dipl.-Ing.**
**Siebensterngasse 54 Postfach 452**
**A-1071 Wien (AT)**

**Beschreibung**

Die Erfindung bezieht sich auf eine Anordnung zum Steuern und Regeln einer Brennkraftmaschine in Abhängigkeit von Betriebsgrößen, wie z. B. Drehzahl, Gaspedalstellung, Temperatur etc., die mit Hilfe von Meßwertgebern ermittelt werden, wobei die Signalleitungen der Meßwertgeber sowie ein Wechselstrom-Ausgang der Lichtmaschine mit den Eingängen eines elektronischen Reglers und der Ausgang des Reglers mit einer Stellvorrichtung, z. B. für die Regelstange einer Einspritzpumpe oder die Drosselklappe eines Vergasers, verbunden sind.

Elektronische Regler für Brennkraftmaschinen sind vielfach bekannt geworden, z. B. aus der EP-A-0 044 289. Eine für die Regelung wichtige Größe ist die jeweilige Motordrehzahl, die von einem Drehzahlgeber festgestellt wird. Der Drehzahlgeber ist bei bekannten Lösungen z. B. als induktiver Geber ausgebildet, der mit den Zähnen des Schwungrades zusammen wirkt, sodaß jeder an dem Geber vorbeieilende Zahn einen Impuls erzeugt. Unter der Voraussetzung üblicher Motordrehzahlen und Schwungräder liefert der Drehzahlgeber bei Normalbetrieb ein Signal, dessen Frequenz in der Größenordnung von 10 kHz liegt.

Da das Drehzahlsignal von besonderer Wichtigkeit für die Regelung ist, versucht man, die Funktionsfähigkeit des Drehzahlgebers ständig zu überprüfen. So wurde vorgeschlagen, den Gleichstromwiderstand der Wicklung eines induktiven Drehzahlgebers periodisch zu messen. Diese Messung kann jedoch zu Fehlschlüssen führen. Wenn nämlich z. B. der Magnet des Gebers defekt ist oder im Motor anfallende Metallspäne einen Nebenschluß im Luftspalt des Drehzahlgebers bilden, kann das Signal entweder ganz ausfallen oder — was sich für die Regelung fatal auswirken kann — eine niedrigere Frequenz liefern und dadurch eine niedrigere Drehzahl vortäuschen. Dies kann insbesondere dann geschehen, wenn die Zähne des Schwungrades nicht gleich hoch sind und bei schwachem Signal nur einige der Spannungsspitzen erfaßt werden. Die Messung des Gleichstromwiderstandes der Geberwicklung zeigt natürlich solche Fehler nicht auf. In den genannten Fällen versucht der Regler die Solldrehzahl an Hand einer falschen Ist-Drehzahl einzuhalten, was zu Überdrehzahlen des Motors und zu dessen Zerstörung führen kann.

Bekanntlich weisen Brennkraftmaschinen für Fahrzeuge durchwegs eine Lichtmaschine auf, die üblicherweise als Drehstrommaschine mit nachfolgender Gleichrichtung ausgeführt ist. Jedenfalls liefert die Maschine ein Wechselspannungssignal und es liegt zunächst der Gedanke nahe, dieses Signal, dessen Frequenz bei Normalbetrieb beispielsweise in der Größenordnung von 1 kHz liegt und das der Drehzahl proportional ist, zur Regelung heranzuziehen, wodurch auf einen eigenen Drehzahlgeber verzichtet werden könnte.

Dem steht jedoch entgegen, daß eine Lichtmaschine nicht starr sondern über einen Keilriemen mit dem Motor gekoppelt ist. Wegen des Keilriemenschlupfes, der sich außerdem ständig ändert, liefert die Lichtmaschine somit kein verläßliches Drehzahlsignal ; bei Keilriemenriß wird überhaupt die Drehzahl Null angezeigt.

In der US-PS 4 425 889 ist eine Anordnung der eingangs genannten Art geoffenbart, der die Drehzahlsignale zweier Drehzahlgeber zugeführt werden. Der erste Drehzahlgeber leitet Drehzahlsignale von einem direkt an der Pumpenwelle sitzenden Zahnrad ab und als zweiter Drehzahlgeber wird die Lichtmaschine verwendet. Der Regler verwendet üblicherweise das Signal des ersten Drehzahlgebers, schaltet jedoch auf das Signal des zweiten Drehzahlgebers um, wenn das Signal des ersten Drehzahlgebers Abnormitäten zeigt. Kriterium hiefür ist, ob die Pulsdauer des Ausgangssignals des ersten Drehzahlgebers zwischen festen, vorgegebenen Werten liegt. Ist dies nicht der Fall, wird automatisch auf den zweiten Drehzahlgeber, nämlich die Lichtmaschine umgeschaltet.

Im Gegensatz dazu setzt es sich die vorliegende Erfindung zum Ziel, mit Hilfe des Wechselspannungssignals der Lichtmaschine die ordnungsgemäße Funktion des Drehzahlgebers ständig zu überprüfen.

Dieses Ziel läßt sich erfindungsgemäß dadurch erreichen, daß der Regler zur Ermittlung des Frequenzverhältnisses der Signale eines Drehzahlgebers und der Lichtmaschine eingerichtet ist, und bei Abweichung des ermittelten Verhältnisses von einem Sollwert ein Steuersignal auslösbar ist.

Im Gegensatz zu der obgenannten US-PS 4 425 889 wird somit das Frequenzverhältnis der beiden Drehzahlgeber überprüft und als Kriterium für die Auslösung des Steuersignals herangezogen. Dies bietet den Vorteil, daß solchermaßen beide Drehzahlgeber auf einfache Weise überprüft werden können und ein ordnungsgemäßer Betrieb aufrechterhalten werden kann, gleichgültig ob der Drehzahlgeber oder die Lichtmaschine (als zweiter Drehzahlgeber) nicht plausible Signale liefert (z. B. Schlupf im Antrieb der Lichtmaschine).

Weitere vorteilhafte Ausgestaltungen der Erfindung sind in den Ansprüchen 2 bis 4 gekennzeichnet.

Von den im Recherchenbericht zu dieser Anmeldung noch genannten Dokumenten beschreibt die US-PS 4 154 395 die Kontrolle der Drehzahl von Turbogeneratoren. Es werden zwei unabhängige Drehzahlgeber verwendet, deren Signale in einer logischen Schaltung miteinander verglichen werden, wobei deren Ausgang dem Signal des ersten Drehzahlgebers entspricht, solange beide Signale vorliegen. Fällt der zweite Drehzahlgeber aus, so bleibt dieser Zustand erhalten, aber es kann ein Warnsignal abgegeben werden. Bei Ausfall des ersten Drehzahlgebers wird auf den zweiten Kanal umgeschaltet und der Ausgang entspricht dem Signal des zweiten Drehzahlgebers. Die Merkmale der Erfindung, nämlich die Ermittlung des Frequenzverhältnisses mit Auslösung eines Steuersignals bei Abweichung des Verhältnisses von einem vorgegebenen Sollwert sind jedoch nicht beschrieben. Die Möglichkeit einer Frequenzänderung wird hier auch gar nicht in Erwägung gezogen, sondern bloß der komplette Ausfall eines Gebers. Dies entspricht auch den Besonderheiten von Turbogeneratoren, die, wie im Vorhalt besonders betont wird, jahrelang ohne Unterbrechung laufen.

Aus der DE-AS 21 09 693 geht ein Regler für große Dieselmotoren (z. B. Schienenfahrzeuge, Generatoren) hervor, bei dem Drehzahlsignale mit einem Tachogenerator einerseits und einem digitalen Drehzahlmesser andererseits ermittelt und über einen Schalter wahlweise als Istwert für die Regelung zur Verfügung gestellt werden. Eine automatische Umschaltung dieses Schalters ist nirgendwo erwähnt, jedoch wirken beide Signale auf eine Abstellvorrichtung ein, die bei Überdrehzahl den Motor abregelt. Ein Vergleich der Frequenzverhältnisse sowie eine automatische Umschaltung sind nicht geoffenbart.

Die US-PS 3 529 246 beschreibt eine elektronische Schaltung zum Messen der Abweichung einer variablen Fequenz von einer festen Frequenz, wobei den Frequenzen proportionale Spannung miteinander verglichen werden. Ein relevanter Bezug zu dem Anmeldungsgegenstand kommt diesem Dokument nach Auffassung der Anmelderin nicht zu.

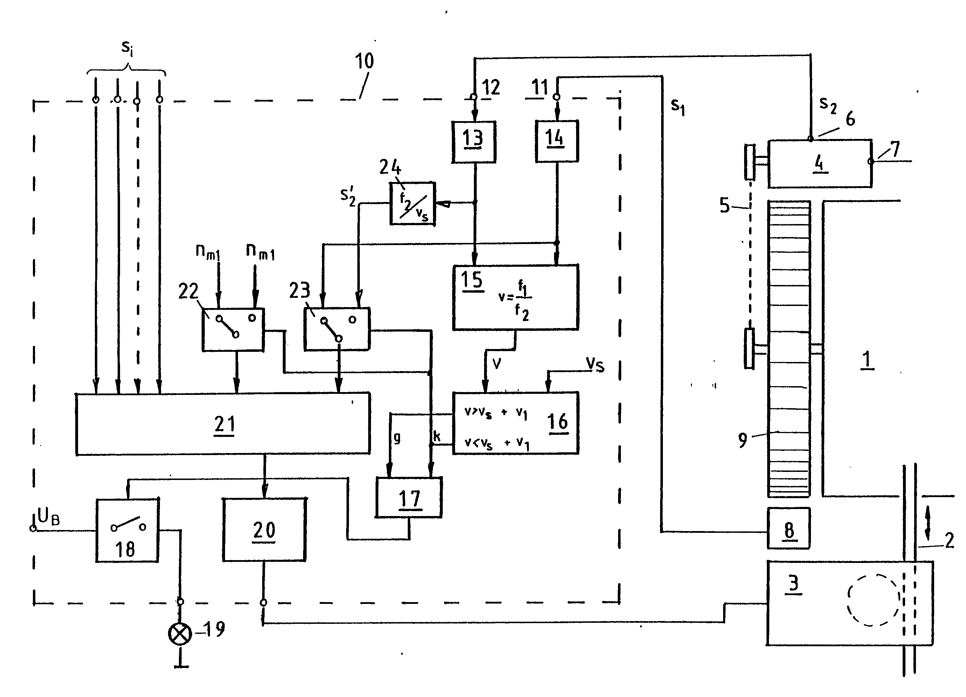

Die Erfindung samt ihren weiteren Vorteilen ist im folgenden an Hand eines Ausführungsbeispieles näher erläutert, das in der Zeichnung veranschaulicht ist. Diese zeigt in schematischer Darstellung den prinzipiellen Aufbau der erfindungsgemäßen Anordnung.

Aus der Zeichnung ist ein schematisch dargestellter Dieselmotor 1 ersichtlich dessen Regelstange 2 mittels einer elektromechanischen Stellvorrichtung 3 verstellbar ist. Es sei jedoch erwähnt, daß es sich bei dem Motor 1 ganz allgemein um eine Brennkraftmaschine handeln kann, beispielsweise um einen Vergaser-Ottomotor, dessen Drosselklappe mittels der Stellvorrichtung 3 verstellbar ist.

An dem Motor 1 ist weiters eine Lichtmaschine 4 vorgesehen, die über einen Keilriemen 5, z. B. mit der Kurbelwelle des Motors in Antriebsverbindung steht und die einen Wechselspannungsausgang 6 sowie einen Gleichspannungsausgang 7 aufweist. Weiters ist ein Drehzahlgeber 8 vorgesehen, der z. B. auf induktivem Weg die Zähne des Schwungrades 9 berührungslos abtastet. Selbstverständlich können auch andere bekannte Drehzahlgeber, z. B. photoelektrische, Anwendung finden.

Dem Motor 1 ist ein Regler 10 zugeordnet der im wesentlichen auf der Basis eines oder mehrerer Mikrocomputer aufgebaut ist. Die Ausgangssignale $s_1$ des Drehzahlgebers 8 und $s_2$ der Lichtmaschine 4 sind Eingängen 11 und 12 des Reglers 10 zugeführt und werden gegebenenfalls über Impulsformer 13, 14 den beiden Eingängen eines Dividierers 15 zugeführt, in dem das Verhältnis $v = f_1/f_2$ gebildet wird, wobei $f_1$ die Frequenz des Signales $s_1$ des Drehzahlgebers 8 und $f_2$ die Frequenz des Signales $s_2$ der Lichtmaschine bedeuten.

Das Signal v wird dem einen Eingang eines Diskriminators 16 zugeführt, an dessen anderem Eingang als Bezugssignal ein Signal $v_s$ liegt, welches dem theoretischen Frequenzverhältnis $f_1/f_2$ entspricht, d. h. dem Verhältnis ohne Keilriemenschlupf, das immer konstant bleibt. An den Ausgängen des Diskriminators 16 treten zwei Steuersignale auf, nämlich ein Signal g, falls $v > v_s + v_1$, was einen Schlupf der Lichtmaschine bedeutet. k ist ein fester Toleranzwert, d. h. ein gewisser Schlupf der Lichtmaschine 4 wird toleriert und ein Signal k, falls $v < v_s - v_2$, was einem Defekt des Drehzahlgebers 8 entspricht. $v_2$ ist gleichfalls ein Toleranzwert, der aus schaltungstechnischen Gründen gleich $v_1$ sein kann oder aber so klein wie möglich gewählt wird, da auch das geringste Absinken von $v = f_1/f_2$ unter $v_s$ auf einen Defekt schließen läßt.

Wie in der Zeichnung gezeigt, können die beiden Steuersignale g und k den Eingängen eines ODER-Gliedes 17 zugeführt werden, das über einen gesteuerten Schalter 18 eine Anzeigelampe 19 an die Batteriespannung $U_B$ legt, soferne das Verhältnis v von seinem Sollwert $v_s$ (um einen bestimmten Betrag) abweicht. Anstelle oder zusätzlich zur Lampe 19 können andere, z. B. akustische Anzeigen vorgesehen werden.

Die Steuersignale g und k können jedoch auch zum direkten Eingriff in die Regelung herangezogen werden, was im folgenden näher erläutert wird.

Die Ansteuerung der Stellvorrichtung 3 erfolgt über eine Ansteuerschaltung 20, die etwa zur Ansteuerung eines Schrittmotors der Stellvorrichtung 3 konzipiert ist. Gesteuert wird die Ansteuerschaltung von einem Mikrocomputer 21, dem verschiedene Signale $s_i$ zugeführt werden, die für Betriebsgrößen, z. B. die Gaspedalstellung, die Motortemperatur, den Luftdruck etc., repräsentativ sind. In Abhängigkeit von diesen Signalen, die mittels nicht gezeigter Meßwertgeber ermittelt werden, erfolgt die Regelung des Motors, in erster Linie — wie gezeigt — über die Stellvorrichtung 3, welche die Regelstange 2 (oder eine Drosselklappe) betätigt.

Darüber hinaus sind Eingänge des Mikrocomputers 21 mit den Ausgängen zweier gesteuerter Schalter 22 und 23 verbunden. Der erste dieser beiden Schalter kann einen Eingang des Mikrocomputers 21 mit je einem von zwei Referenzsignalen $n_{m1}$, $n_{m2}$ verbinden, welche die Maximaldrehzahl des Motors 1 festlegen. Der zweite Schalter 23 verbindet einen weiteren Eingang des Mikrocomputers 21 entweder mit dem Signal $s_1$, das — gegebenenfalls geformt — von dem Drehzahlgeber 8 stammt oder mit einem Signal $s_{2'}$, das am Ausgang eines Frequenzteilers 24 auftritt, der die Frequenz $f_1$ des von der Lichtmaschine 4 stammenden Signales $S_2$ durch das Soll-Fre-

quenzverhältnis $v_s$ teilt.

Die Anordnung nach der Erfindung arbeitet folgendermaßen. Im ungestörten Betrieb erhält der Mikrocomputer 21 außer den Signalen $s_i$ auch das (geformte) Signal $s_1$ des Drehzahlgebers 8, wobei als Referenzsignal für die Maximaldrehzahl das Signal $n_{m1}$ dem Computer 21 zugeführt ist. Solange ein gewisser Schlupf der Lichtmaschine 4 nicht überschritten wird, bleibt dieser Zustand aufrecht.

Wird der Lichtmaschinenschlupf zu groß, so sinkt die Frequenz des Signales $s_2$ stark ab und das Frequenzverhältnis $v = f_1/f_2$ wird größer als der zulässige Grenzwert $v_s + v_1$. Der Diskriminator 16 gibt das Steuersignal g ab, welches über die ODER-Schaltung 17 und den Schalter 18 die Lampe 19 aktiviert. Auf diese Weise wird dem Fahrer der regelwidrige Betriebszustand angezeigt. Gleiches gilt selbstverständlich auch, falls der Keilriemen 5 reißt und die Frequenz f2 des Signales $s_1$ null wird.

Falls anderenfalls am Drehzahlgeber 8 ein Defekt auftritt, der ein Absinken der Frequenz $f_1$ des Signales $s_1$ zur Folge hat, sinkt das Frequenzverhältnis v unter den zulässigen Minimalwert $v_s - v_2$ und der Diskriminator 16 liefert ein Steuersignal k, das — so wie das Signal g — über die ODER-Schaltung 17 und den Schalter 18 die Lampe 19 aktiviert.

Wie beim Ausführungsbeispiel gezeigt, kann in diesem fall zusätzlich ein Eingriff in die Regelung erfolgen. Das Signal k schaltet nämlich nun die beiden gesteuerten Schalter 22 und 23 um, sodaß nun einerseits an Stelle des — unbrauchbaren — Signales $s_1$ des Drehzahlgebers das durch $v_s$ in seiner Frequenz geteilte Signal $s_2$ der Lichtmaschine dem Mikrocomputer 21 zugeführt ist. Die Drehzahlregelung (Drehzahl-Ist-Wert) erfolgt somit nun über das Signal der Lichtmaschine. Gleichzeitig wird aus Sicherheitsgründen (wegen des Schlupfes der Lichtmaschine) auf ein Referenzsignal $n_{m2}$ für die Maximaldrehzahl umgeschaltet wobei $n_{m2} < n_{m1}$. Auf diese Weise ist ein Notbetrieb möglich, bis der Fehler am Drehzahlgeber 8 behoben ist.

Es ist anzumerken, daß die gezeigte Schaltung des Reglers 10 nur eine Ausführungsmöglichkeit zeigt. Für die Realisierung der Schaltung, z. B. des Dividierers 15, des Diskriminators 16, des gesteuerten Schalters 22, 23, des ODER-Gliedes 17, des Frequenzteilers 24 und dgl. mehr kann ein Mikrocomputer herangezogen werden, z. B. auch ein Teil des Mikrocomputers 21.

## Patentansprüche

1. Anordnung zum Steuern und Regeln einer Brennkraftmaschine (1) in Abhängigkeit von Betriebsgrößen, wie z. B. Drehzahl, Gaspedalstellung, Temperatur etc., die mit Hilfe von Meßwertgebern ermittelt werden, wobei die Signalleitungen der Meßwertgeber sowie ein Wechselstrom-Ausgang der Lichtmaschine (4) mit den Eingängen eines elektronischen Reglers (10) und der Ausgang des Reglers mit einer Stellvorrichtung (3), z. B. für die Regelstange einer Einspritzpumpe oder Drosselklappe eines Vergasers, verbunden sind dadurch gekennzeichnet, daß der Regler (10) zur Ermittlung des Frequenzverhältnisses der Signale ($s_1$, $s_2$) eines Drehzahlgebers (8) und der Lichtmaschine (4) eingerichtet ist, und bei Abweichung des ermittelten Verhältnisses von einem Sollwert ein Steuersignal (g, k) auslösbar ist.

2. Anordnung nach Anspruch 1, dadurch gekennzeichnet, daß das Steuersignal (g, k) einer Anzeigevorrichtung, z. B. einer Warnlampe (19) zuführbar ist.

3. Anordnung nach Anspruch 1 oder 2, dadurch gekennzeichnet, daß bei Vorliegen eines unterhalb des Sollwertes liegenden Frequenzverhältnisses das Steuersignal (k) zur Umschaltung des Drehzahl-Ist-Signales des Reglers (10) herangezogen ist, wobei an Stelle des Signales ($s_1$) des Drehzahlgebers (8) das durch den Sollwert des Frequenzverhältnisses ($v_s$) geteilte Wechselspannungssignal ($s_2$) der Lichtmaschine (4) als Drehzahl-Ist-Signal vorliegt.

4. Anordnung nach Anspruch 3, dadurch gekennzeichnet, daß das Steuersignal (k) zur Umschaltung des die Maximaldrehzahl festlegenden Referenzsignales ($nm_1$) auf einen kleineren Signalwert ($nm_2$) herangezogen ist.

## Claims

1. Arrangement for controlling an internal combustion engine (1) as a function of operational parameters, such as, for example, speed, accelerator pedal position, temperature, etc, which are determined by means of measured value transducers, the signal lines of the measured value transducers and an alternating current output of the generator (4) being connected to the inputs of an electronic controller (10) and the output of the controller to an adjusting device (3), for the control rod of an injection pump or throttle flap of a carburettor, for example, characterized in that the controller (10) is arranged for detecting the frequency ratio of the signals ($s_1$, $s_2$) of a speed transducer (8) and of the generator (4), and a control signal (g, k) can be tripped in the case of a deviation of the detected ratio from a desired value.

2. Arrangement according to Claim 1, characterized in that the control signal (g, k) can be fed to an indicating device, to a warning lamp (19) for example.

3. Arrangement according to Claim 1 or 2, characterized in that, where a frequency ratio below the desired value exists, the control signal (k) is used to switch over the actual speed signal of the controller (10), the alternating voltage signal (s2) of the generator (4) divided by the desired value of the frequency ratio ($v_s$) existing as actual speed signal instead of the signal ($s_1$) of the speed transducer (8).

4. Arrangement according to Claim 3, characterized in that the control signal (k) is used to switch over the reference signal $(m_{n1})$ (sic) which determines the maximum speed to a lower signal value $(m_{n2})$ (sic).

## Revendications

1. Dispositif pour commander et régler un moteur à combustion interne (1) en fonction de paramètres de fonctionnement, comme par exemple la vitesse de rotation, la position de la pédale d'accélérateur, la température, etc, qui sont déterminés à l'aide de capteurs de mesure, les lignes de transmission de signaux des capteurs de mesure ainsi qu'une sortie à courant alternatif de l'alternateur (4) étant reliées aux entrées d'un régulateur électronique (10), dont la sortie est raccordée à un dispositif de réglage (3) par exemple la tige de réglage d'une pompe d'injection ou d'un papillon d'un carburateur, caractérisé en ce que le régulateur (10) est agencé de manière à déterminer le rapport des fréquences des signaux $(s_1, s_2)$ d'un capteur tachymétrique (8) et de l'alternateur (4) et qu'un signal de commande (g, k) peut être déclenché, dans le cas où le rapport déterminé s'écarte d'une valeur de consigne.

2. Dispositif selon la revendication 1, caractérisé en ce que le signal de commande (g, k) peut être envoyé à un dispositif d'affichage, par exemple une lampe témoin (19).

3. Dispositif selon la revendication 1 ou 2, caractérisé en ce que, dans le cas de la présence d'un rapport de fréquences inférieur à la valeur de consigne, le signal de commande (k) est utilisé pour commuter le signal de la vitesse de rotation réelle du régulateur (10), auquel cas à la place du signal $(s_1)$ du capteur tachymétrique (8), c'est le signal de tension alternative $(s_2)$ de l'alternateur (4), divisé par la valeur de consigne du rapport de fréquences $(v_s)$, qui est présent en tant que signal de la vitesse de rotation réelle.

4. Dispositif selon la revendication 3, caractérisé en ce que le signal de commande (k) est utilisé pour commuter le signal de référence $(nm_1)$, qui détermine la vitesse de rotation maximale, sur une valeur de signal plus faible $(nm_2)$.

EP 0 188 403 B1